# EUROPÄISCHE PATENTSCHRIFT

(11) **EP 2 519 815 B1**
(45) Veröffentlichungstag und Bekanntmachung des Hinweises auf die Patenterteilung: **20.09.2017**
(21) Anmeldenummer: 10777018.2
(22) Anmeldetag: 16.11.2010
(51) Int. Cl.: G01N 27/407

(54) **KERAMISCHES SENSORELEMENT FÜR KLEINBAUENDE ABGASSONDEN**
CERAMIC SENSOR ELEMENT FOR COMPACT EXHAUST GAS PROBES
ÉLÉMENT DE CAPTEUR CÉRAMIQUE POUR UNE SONDE DE GAZ D'ÉCHAPPEMENT COMPACTE

(30) Priorität: 30.12.2009 DE 102009055416
(43) Veröffentlichungstag der Anmeldung: 07.11.2012
(73) Patentinhaber: Robert Bosch GmbH, 70442 Stuttgart (DE)
(72) Erfinder: SCHNEIDER, Jens, 71229 Leonberg (DE); RENGER, Christoph, 87439 Kempten (DE); SOYEZ, Guido, 71636 Ludwigsburg (DE); GRALKA, Ulrich, 70597 Stuttgart (DE); SCHNEIDER, Gerhard, 96175 Pettstadt (DE)
(86) Internationale Anmeldenummer: PCT/EP2010/067563
(87) Internationale Veröffentlichungsnummer: WO 2011/080003

(56) Entgegenhaltungen:
- DE-A1- 3 538 460
- DE-A1- 4 109 516
- DE-A1-102008 001 928
- US-A- 4 582 657
- US-A- 5 110 442
- US-A1- 2003 188 969

## Beschreibung

### Stand der Technik

Aus dem Stand der Technik sind Sensorelemente zur Erfassung mindestens einer Eigenschaft eines Gases in einem Messgasraum bekannt. Dabei können grundsätzlich eine Vielzahl von Eigenschaften des Gases erfasst werden. Die Erfindung wird im Folgenden, ohne Beschränkung weiterer möglicher Eigenschaften, die qualitativ und/oder quantitativ erfasst werden können, unter Bezugnahme auf die Bestimmung eines Anteils einer Gaskomponente in dem Messgasraum beschrieben. Beispielsweise kann es sich bei dem Anteil um einen Partialdruck und/oder einen prozentualen, beispielsweise stöchiometrischen, Anteil des Gases in dem Messgasraum handeln. Derartige Sensorelemente sind beispielsweise in Form von so genannten Lambdasonden aus dem Stand der Technik bekannt, mittels derer ein Sauerstoffanteil in einem Gas bestimmt werden kann, beispielsweise im Abgas einer Brennkraftmaschine. Für Ausführungsbeispiele derartiger Lambdasonden kann exemplarisch auf Robert Bosch GmbH: Sensoren im Kraftfahrzeug, Ausgabe 2007, Seiten 154-159 verwiesen werden.

Derartige Sensorelemente umfassen in der Regel einen keramischen Schichtaufbau mit mindestens einem Festelektrolyten. Bekannte Festelektrolyte sind beispielsweise Yttrium-stabilisiertes Zirkondioxid (YSZ) oder andere dotierte Metalloxide, wie beispielsweise Scandium-dotiertes Zirkondioxid. Die keramischen Schichtaufbauten erstrecken sich dabei in der Regel von einem Kontaktierungsbereich hin zu einem Messbereich. In dem Kontaktierungsbereich sind eine oder mehrere elektrische Kontakte vorgesehen. Da in der Regel auch tiefere Schichtebenen des Schichtaufbaus elektrisch kontaktiert werden müssen, sind so genannte Durchkontaktierungen vorgesehen, welche beispielsweise eine oder mehrere Bohrungen und/oder Ausstanzungen in dem Schichtaufbau umfassen. Die Bohrungen sind mit einem elektrisch leitfähigen Mavollständig oder teilweise ausgefüllt oder zumindest beschichtet. Dabei tritt jedoch eine technische Herausforderung dahingehend auf, dass bekannte Festelektrolytmaterialien, wie beispielsweise YSZ, bei höheren Temperaturen, beispielsweise ab 350 °C, ionisch leitfähig werden. Die Durchkontaktierungen wirken dann selbst als Elektroden.

Zur Lösung dieser Problematik sind mehrere Ansätze bekannt. So beschreibt beispielsweise DE 10014995C1 einen elektrochemischen Messfühler zur Bestimmung von Gaskomponenten, bei welchem die elektrisch leitfähigen Materialien der Durchkontaktierungen gegenüber den Festelektrolytmaterialien durch aufwendige Isolationsschichten isoliert sind. Ein anderer Ansatz besteht darin, die Sensorelemente vergleichsweise lang und schlank zu gestalten, so dass der Durchkontaktierungsbereich räumlich vom Bereich der eigentlichen Elektroden getrennt wird. Beispielsweise weisen bekannte Schichtaufbauten von Sensorelementen ein Verhältnis von Länge zu Breite (L/B) von mehr als 10:1 auf. Die schlanke Bauweise ist nach dem Stand der Technik notwendig für einen ausreichend großen Temperaturgradienten über die Länge des Sensorelements, welcher dazu führt, dass die Temperatur der Keramik im Bereich der Durchkontaktierungslöcher beim Sensorbetrieb immer unterhalb einer kritischen Temperatur, beispielsweise 350 °C, liegt. Beide Lösungen weisen jedoch in der Praxis Nachteile auf. So sind insbesondere die hohen Längen der Abgassonden in vielen Fällen nachteilig, da teilweise Sensorelemente für besonders kurzbauende Abgassonden gewünscht werden, insbesondere für stöchiometrische Lambdasonden oder Breitband-Lambdasonden, welche eine Baugröße von weniger als 65 mm aufweisen. Aufwendige Durchkontaktierungen andererseits erhöhen die Produktionskosten und den Herstellungsaufwand erheblich. Weitere Sensorelemente sind aus der DE 3538 460 A1 und der US 4582 657 A bekannt

### Offenbarung der Erfindung

Es wird daher ein Sensorelement zur Erfassung mindestens einer Eigenschaft eines Gases in einem Messgasraum, insbesondere zur Bestimmung eines Anteils einer Gaskomponente, vorgeschlagen, welches den oben beschriebenen Zielkonflikt zumindest weitgehend löst. Das vorgeschlagene Sensorelement kann insbesondere zur qualitativen und/oder quantitativen Bestimmung eines Sauerstoffanteils und/oder eines Anteils einer anderen Gaskomponente in einem Gas in dem Messgasraum eingesetzt werden.

Die Erfindung basiert auf der Erkenntnis, dass es von Vorteil ist, Abgassonden, insbesondere Lambdasonden, möglichst kleinbauend zu konstruieren. Neben geringeren Materialkosten, welche beispielsweise in einer Einsparung von Edelmetallen in Zuleitungen und/oder Heizelementen und/oder in einer Einsparung an Materialmenge eines Festelektrolyt-Substrats, beispielsweise eines Zirkondioxid-Substrats, bestehen, ist vor allem die erweiterte Applikationsfreiheit bei der Motorenauslegung durch einen Anwender von entscheidender Bedeutung. Für kleinbauende Sensorelemente, beispielsweise mit einem Längenbauraumbedarf eines keramischen Schichtaufbaus von weniger als 65 mm, werden entsprechend kurze keramische Sensorelemente benötigt. Für die kleineren Abgassonden gelten jedoch grundsätzlich die gleichen Anforderungen bezüglich der Robustheit und der Temperaturbeständigkeit wie für herkömmliche Sensorelemente nach dem Stand der Technik. Für das Sensorelement selbst, insbesondere das keramische Sensorelement, sind, wie im Folgenden ausgeführt, jedoch die Anforderungen hinsichtlich der Temperaturbeständigkeit noch wesentlich gesteigert.

Bei der Minimierung der Sensorelement-Länge sind, wie oben dargestellt, mehrere wichtige und zum Teil gegenläufige Anforderungen zu erfüllen. Da der Kontaktierbereich kurzer Sensorelemente wesentlich näher an heißen Bauelementen des Sensorelements liegt, beispielsweise an einem heißen Sechskant eines Gehäuses des Sensorelements, werden Durchkontaktierungslöcher (im Folgenden auch als DK-Löcher bezeichnet) beim Betrieb des Sensorelements heißer als bei längeren Sensorelementen. Wie oben dargestellt, wird daher der Schichtaufbau der Sensorelemente im Stand der Technik durch eine lange und schlanke Bauweise so ausgelegt, dass die Zirkondioxid-Keramik eine Maximaltemperatur, beispielsweise eine Maximaltemperatur von 350 °C, im Durchkontaktierungsbereich nicht überschreitet. Ist dies aus technischen Gründen nicht möglich, so müssen, wenn Temperaturen oberhalb dieser Maximaltemperatur auftreten, in der Regel die Durchkontaktierungslöcher mittels eines aufwendigen Prozesses mit mindestens einer Isolationsschicht ausgestattet werden, um Kurzschlüsse zwischen den Durchkontaktierungslöchern zu vermeiden.

Bei kurzbauenden Sensorelementen, beispielsweise mit einer Länge des Schichtaufbaus von weniger als 65 mm, wie es im Rahmen der vorliegenden Erfindung bevorzugt ist, wird diese Maximaltemperatur jedoch in der Regel weit überschritten. In diesem Fall sind die oben genannten Isolationsschichten in vielen Fällen zwingend erforderlich. Dennoch gewährleistet die vorliegende Erfindung, dass der Aufwand, welcher für die Herstellung der Isolationsschichten betrieben werden muss, erheblich reduziert wird. Zudem wird eine fertigungssichere Beschichtung mit Isolationspaste und eine resultierende geschlossene Isolationsschicht gewährleistet. Beispielsweise kann eine resultierende geschlossene Isolationsschicht mit einer Dicke von mindestens 30,0 µm sicher gewährleistet werden. Zur Herstellung von Isolationsschichten werden in der Regel Isolationspasten durch die Durchkontaktierungslöcher gesaugt oder auf andere Weise in die Durchkontaktierungslöcher eingebracht.

Um beispielsweise die geschlossene resultierende Isolationsschicht von mindestens 30,0 µm sicher gewährleisten zu können, sind daher in der Regel ausreichende Lochdurchmesser der Durchkontaktierungslöcher, welche im Folgenden ohne Beschränkung möglicher, zu einem Bohrverfahren alternativer Herstellungsverfahren auch als "Bohrungen" bezeichnet werden, erforderlich. Beispielsweise sind in der Regel für eine Pastendurchsaugung bei einer keramischen Foliendicke von 500 µm Lochdurchmesser von mindestens 1,0 mm erforderlich. Bei der Anordnung von einem oder mehreren Bohrlöchern im Anschlusskontaktbereich wird das Sensorelement jedoch in diesem Bereich durch derartig große Bohrungen signifikant geschwächt. Nach dem Stand der Technik werden im Körper des Sensorelements verbaute Schichtaufbauten in der Regel an zwei Positionen fixiert. So erfolgt eine Fixierung des Schichtaufbaus in der Regel einmal in einem Abdichtbereich des Schichtaufbaus in einem Gehäuse des Sensorelements. Eine zweite Fixierung erfolgt in einem Kontakthalter am anschlussseitigen Ende des Schichtaufbaus. Dabei werden jedoch bei der Montage der Sensorelemente, beispielsweise in einem Fügeprozess, und insbesondere im Fahrzeugeinsatz Biegebelastungen auf den Schichtaufbau ausgeübt. Die vorliegende Erfindung basiert daher auf der Erkenntnis, dass ein zu schwaches Sensorelement durch Bruch im Durchkontaktierungsbereich versagen kann.

Basierend auf der Erkenntnis dieses Zielkonflikts, welcher einerseits in der in vielen Fällen bestehenden Notwendigkeit eines Vorsehens von Bohrungen mit hohem Durchmesser, beispielsweise Durchmessern oberhalb von 0,5 mm, insbesondere von mindestens 1,0 mm, besteht, und andererseits in einer Gewährleistung einer ausreichenden mechanischen Stabilität, wurden systematisch Versuchsreihen an Schichtaufbauten für Sensorelemente durchgeführt. Hierbei zeigt sich, dass das Verhältnis der Länge des Schichtaufbaus zur Breite eine erhebliche Rolle spielt. Hieraus ergeben sich die folgenden Merkmale des erfindungsgemäßen Sensorelements.

Das vorgeschlagene Sensorelement weist mindestens einen Schichtaufbau mit mindestens zwei Elektroden und mindestens einem die Elektroden verbindenden keramischen Festelektrolyten auf. Die mindestens zwei Elektroden können beispielsweise auf derselben Seite einer Festelektrolytschicht und/oder auf einander gegenüberliegenden Seiten der Festelektrolytschicht angeordnet sein. Die Elektroden können beispielsweise Edelmetall-Keramik-Elektroden umfassen, beispielsweise so genannte Cermet-Elektroden. Derartige Elektroden sind aus dem Bereich keramischer Sensorelemente grundsätzlich bekannt. Die Elektroden und der Festelektrolyt können eine oder mehrere Zellen des Sensorelements bilden. Das Sensorelement kann somit als einzelliges oder auch als mehrzelliges Sensorelement ausgestaltet sein. Bezüglich möglicher Ausgestaltungen des Sensorelements kann auf den Stand der Technik verwiesen werden. Es können beispielsweise Sprungsonden oder auch Breitbandsonden realisiert werden. Der Schichtaufbau kann darüber hinaus weitere Elemente umfassen, wie beispielsweise Elektrodenkontakte, Durchkontaktierungen (siehe unten), Zuleitungen, ein oder mehrere Heizelemente oder ähnliche Elemente, wie sie aus dem Stand der Technik bekannt sind.

Der Schichtaufbau weist eine oder mehrere Schichtebenen auf. Diese Schichtebenen können vorzugsweise parallel zueinander angeordnet sein. Die Schichtebenen definieren eine Längserstreckung des Schichtaufbaus parallel zu den Schichtebenen und eine Quererstreckung des Schichtaufbaus quer zur Längserstreckung, beispielsweise senkrecht zur Längserstreckung. Dabei ist die Längserstreckungsrichtung diejenige Richtung des Schichtaufbaus, in welcher die Ausdehnung des Schichtaufbaus höher ist als die Richtung der Quererstreckung. Beispielsweise kann die Längserstreckungsrichtung parallel zu einer Einsteckrichtung sein, in welcher das Sensorelement und/oder der Schichtaufbau des Sensorelements in den Messgasraum eingesteckt werden. Beispielsweise kann das Sensorelement ein Gehäuse aufweisen, welches eine Längserstreckungsachse aufweist, beispielsweise eine Achse einer Rotationssymmetrie des Sensorelements. Die Längserstreckungsrichtung kann somit beispielsweise eine Richtung parallel zur Längserstreckungsachse des Sensorelements sein. Der Schichtaufbau kann entsprechend in das Gehäuse des Sensorelements eingesetzt sein. Die Quererstreckung ist in diesem Fall vorzugsweise die Richtung senkrecht zur Längserstreckungsachse des gesamten Sensorelements.

Erfindungsgemäß wird vorgeschlagen, den Schichtaufbau derart auszugestalten, dass dessen Längserstreckung eine Länge L und dessen Quererstreckung eine Breite B aufweist, wobei das Verhältnis L/B im Bereich von 6,0 bis 8,5 liegt. Die Länge kann dabei grundsätzlich an einer beliebigen Stelle in Längserstreckungsrichtung gemessen werden, und die Breite grundsätzlich an einer beliebigen Stelle in Richtung der Quererstreckung des Schichtaufbaus. Besonders bevorzugt ist es jedoch, wenn die Länge die maximale Länge in Richtung der Längserstreckung ist, also die maximale Länge des Schichtaufbaus. Die Breite kann beispielsweise die Breite an der breitesten Stelle des Schichtaufbaus sein, also die maximale Breite des Schichtaufbaus, und/oder eine Breite in einem Durchkontaktierungsbereich, wie unten noch näher erläutert wird. Beispielsweise kann gelten: 7,5 < UB < 8,5. Der Schichtaufbau kann insbesondere senkrecht zu der mindestens einen Schichtebene eine Gesamtschichtdicke aufweisen. Diese Gesamtschichtdicke kann insbesondere in einem gesinterten Zustand eines keramischen Schichtaufbaus gemessen sein. Die Gesamtschichtdicke kann insbesondere im Bereich von 0,3 mm bis 4,0 mm, besonders bevorzugt im Bereich von 0,7 mm bis 2,5 mm liegen. Die Länge L kann insbesondere eine maximale Länge in der Längserstreckungsrichtung sein und die Breite B eine maximale Breite quer zur Längserstreckungsrichtung, insbesondere senkrecht zur Längserstreckungsrichtung. Besonders bevorzugt ist es, wenn die Länge L kleiner ist als 65 mm, also wenn es sich um ein Sensorelement mit einem kurzen Schichtaufbau handelt.

Der Schichtaufbau kann insbesondere mindestens eine Zuleitung umfassen. Die mindestens eine Zuleitung kann sich insbesondere von mindestens einem Anschlusskontakt, beispielsweise auf einer oder mehreren Oberflächen des Schichtaufbaus, zu mindestens einer der Elektroden erstrecken. Besonders bevorzugt ist es dabei, wenn die Zuleitung zumindest teilweise parallel zu der Längserstreckung verläuft. Insbesondere kann die Zuleitung oder mindestens eine der Zuleitungen auch in einer tieferen Schichtebene des Schichtaufbaus angeordnet sein, also nicht auf einer oder mehreren der Oberflächen des Schichtaufbaus. Erfindungsgemäß umfasst der Schichtaufbau mindestens eine Durchkontaktierung, welche mindestens eine Schichtebene durchdringt. Erfindungsgemäß ist die Durchkontaktierung gegenüber einem Material der durchdrungenen Schichtebene, insbesondere einem Festelektrolytmaterial elektrisch isoliert, wie oben ausgeführt wurde. Diesbezüglich kann beispielsweise auf den Stand der Technik verwiesen werden. Beispielsweise kann die Dicke der elektrischen Isolierung mindestens 20,0 µm, vorzugsweise mindestens 30,0 µm, umfassen.

Die Durchkontaktierung umfasst erfindungsgemäß eine Bohrung in dem Schichtaufbau sowie mindestens eine zumindest teilweise die Bohrung ausfüllende Füllung. Insbesondere kann dies eine Füllung mit einer oder mehreren Schichten eines Isolatormaterials und/oder eine Füllung mit einer oder mehreren Schichten eines elektrisch leitfähigen Materials umfassen. Beispielsweise können auf Wände der Bohrungen zunächst eine oder mehrere Isolatorschichten aufgebracht sein, gefolgt von einer oder mehreren Schichten und/oder einer oder mehreren Füllungen eines elektrisch leitfähigen Materials. Die mindestens eine Bohrung weist erfindungsgemäß einen Durchmesser d auf, beispielsweise einen Durchmesser d von mindestens 0,5 mm, vorzugsweise von mindestens 1,0 mm, wobei erfindungsgemäß das Verhältnis der Breite B zum Durchmesser d im Bereich von 3,8 bis 5,0 liegt, insbesondere im Bereich von 4,0 bis 4,5.

Die mindestens eine Durchkontaktierung kann insbesondere in einem Durchkontaktierungsbereich des Schichtaufbaus angeordnet sein. Unter einem Durchkontaktierungsbereich ist dabei die Umgebung der mindestens einen Durchkontaktierung zu verstehen, beispielsweise ein Bereich, welcher sich von dem Rand der Durchkontaktierung aus um maximal 2 mm in beide Richtungen in Längserstreckungsrichtung des Schichtaufbaus erstreckt. Die Breite B, welche oben definiert wurde, kann insbesondere eine Breite des Schichtaufbaus im Durchkontaktierungsbereich sein, also insbesondere senkrecht zur Längserstreckungsrichtung im Durchkontaktierungsbereich gemessen sein.

Der Schichtaufbau kann insbesondere parallel zu der Schichtebene des Schichtaufbaus einen Querschnitt aufweisen, welcher ausgewählt ist aus einem der folgenden Querschnitte: ein rechteckiger Querschnitt; ein trapezförmiger Querschnitt; ein sich verjüngender Querschnitt, insbesondere ein Querschnitt mit einer maximalen Breite in einem Durchkontaktierungsbereich und einer Verjüngung im Bereich der Elektroden. Auch andere Querschnitte sind jedoch grundsätzlich möglich.

Das vorgeschlagene Sensorelement schlägt also bestimmte Einstellungen der Grö-ßenverhältnisse von Länge L, Breite B und vorzugsweise auch des Durchmessers d des mindestens einen optionalen Durchkontaktierungslochs, beziehungsweise der Bohrung vor. Die vorgeschlagenen Verhältnisse schaffen, wie experimentell nachgewiesen wurde, eine Voraussetzung dafür, dass die beschriebenen gegenläufigen Anforderungen an das keramische Sensorelement erfüllt werden können, insbesondere für eine Abgassonde. So kann insbesondere gewährleistet werden, dass die Durchkontaktierungslöcher groß genug ausgelegt werden können, um sie sicher und großtechnisch mit einer oder mehreren Isolationsschichten zu versehen, die auch beispielsweise bei Temperaturen oberhalb von 500 °C hohe Übergangswiderstände aufweisen können, beispielsweise Übergangswiderstände R >1 MΩ. Um solche großen Übergangswiderstände zu erreichen, hat sich eine Isolatorschicht von mindestens 30 µm Schichtdicke als vorteilhaft oder sogar erforderlich erwiesen.

Weiterhin kann der Schichtaufbau des Sensorelements derart gestaltet werden, dass dieser eine ausreichende Festigkeit aufweist, um Biegebruchbelastungen von 80 N und Schüttelbelastungen von beispielsweise 30 g auch bei Temperaturen oberhalb von 500 °C über die Applikationslebensdauer zu bestehen, ohne zu versagen. Das vorgeschlagene Sensorelement kann insbesondere im Automobilbereich eingesetzt werden, in welchem besonders hohe Belastungen auftreten. Gleichzeitig können der Schichtaufbau und/oder das gesamte Sensorelement derart kurz ausgelegt werden, dass diese für einen Verbau in Sonden mit einem Bauraumbedarf von weniger als 65 mm geeignet sind.

Die erfindungsgemäße Lösung des Problems dieser Zielkonflikte basiert insbesondere auf der Erkenntnis, dass ab einem bevorzugten Verhältnis L/B von vorzugsweise weniger als 8,5 die gegenläufigen Anforderungen bei der Auslegung des Durchkontaktierungsbereichs erfüllbar werden. Insbesondere in einem Bereich L/B von 8,5 bis 7,5 werden die gegenläufigen Anforderungen bei der Auslegung des Durchkontaktierungsbereichs besonders gut erfüllt. Dementsprechend können stabile Sensorelemente hergestellt werden, die eine oder mehrere Durchkontaktierungen aufweisen. Diese Durchkontaktierungen können insbesondere mit einer oder mehreren Schichten aus Isolationspaste versehen und mit Leitpaste beschichtet sein. Die Durchkontaktierungen können teil- oder vollgefüllt ausgestaltet sein. Die Durchkontaktierungen können beispielsweise eine Kontaktierung von innen liegenden Heizerelektroden und/oder innen liegenden Elektrodenzuleitungen übernehmen. Das oben vorgeschlagene Verhältnis L/B des Schichtaufbaus kann optional lediglich im Durchkontaktierungsbereich aufrechterhalten werden. Somit ergeben sich zu einer Ausgestaltung mit rechteckigem Querschnitt Alternativen, beispielsweise trapezförmige Querschnitte und/oder Querschnitte mit Abrundungen, beispielsweise computer-optimierten Abrundungen, insbesondere in Form von abgerundeten Verjüngungen.

Das vorgeschlagene Sensorelement in einer oder mehreren der vorgeschlagenen Ausgestaltungen lässt sich insbesondere, wie oben ausgeführt, in Form von Lambdasonden in Kraftfahrzeugen, stationären Motoren oder in Verbrennungsanlagen einsetzen.

### Kurze Beschreibung der Figuren

Weitere optionale Einzelheiten und Merkmale der Erfindung ergeben sich aus der nachfolgenden Beschreibung bevorzugter Ausführungsbeispiele, welche in den Figuren dargestellt sind.

Im Einzelnen zeigen:
- Figur 1: ein Ausführungsbeispiel eines Schichtaufbaus eines Sensorelements;
- Figur 2: eine Gegenüberstellung der Wärmebelastung langer und kurzer Schichtaufbauten;
- Figur 3: ein Durchkontaktierungsbereich eines kurzbauenden Sensorelements gemäß Figur 2;
- Figur 4: eine Detaildarstellung einer elektrischen Kontaktierung des Durchkontaktierungsbereichs eines Schichtaufbaus in einem Sensorelement;
- Figur 5: ein Beispiel eines Versuchs zur Biegebelastung eines Schichtaufbaus;
- Figur 6: ein typisches Bruchbild eines Schichtaufbaus nach einer Biegebelastung;
- Figur 7: eine schematische Darstellung des Einbaus eines Schichtaufbaus in einem Sensorelement und des Orts einer überwiegenden Kraftbeaufschlagung;
- Figuren 8 und 9: Gegenüberstellungen von Längen-zu-Breiten-Verhältnissen herkömmlicher (Figur 8) und erfindungsgemäßer (Figur 9) Schichtaufbauten;
- Figur 10: Häufigkeitsverteilungen von Brüchen als Funktion des Längen-zuBreiten-Verhältnisses der Schichtaufbauten;
- Figuren 11A und 11B: verschiedene Darstellungen einer Durchkontaktierung; und
- Figuren 12A bis 12C: verschiedene Ausgestaltungen bevorzugter Querschnitte von Schichtaufbauten erfindungsgemäßer Sensorelemente.

### Ausführungsbeispiele

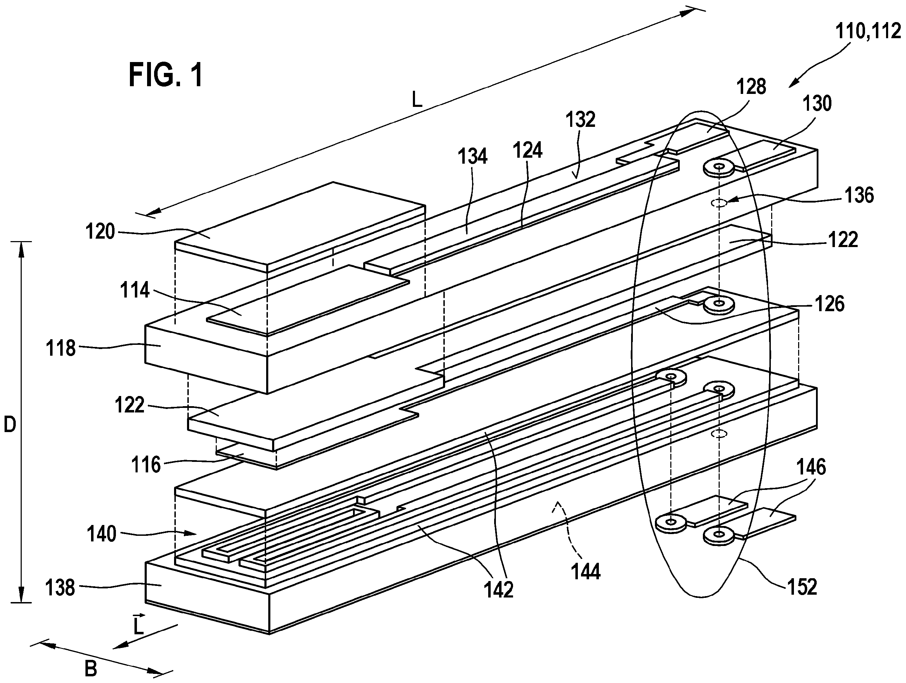

In Figur 1 ist ein typisches Beispiel eines Schichtaufbaus 110 eines Sensorelements 112 zur Erfassung einer Eigenschaft eines Gases in einem (nicht dargestellten) Messgasraum gezeigt. Im dargestellten Ausführungsbeispiel handelt es sich bei dem Sensorelement 112 beispielsweise um eine als Sprungsonde ausgestaltete Lambdasonde. Der Schichtaufbau weist im dargestellten Beispiel zwei Elektroden 114, 116 auf, welche exemplarisch auf einander gegenüberliegenden Seiten eines Festelektrolyten 118, beispielsweise einer Festelektrolytschicht aus Yttrium-stabilisiertem Zirkondioxid (YSZ) angeordnet sind. Die Elektrode 114 ist dabei über eine gasdurchlässige Schutzschicht 120 mit Gas aus dem Messgasraum beaufschlagbar und wird auch als Außenelektrode (AE) bezeichnet. Die zweite Elektrode 116 ist hingegen in einer tieferen Ebene des Schichtaufbaus 110 angeordnet und kann beispielsweise über einen Referenzgaskanal 122, beispielsweise eine Luftreferenz, mit einem Referenzgasraum in Verbindung stehen, beispielsweise einem Umgebungsraum einer Brennkraftmaschine. Die zweite Elektrode 116 wird im dargestellten Ausführungsbeispiel häufig auch als Referenzelektrode (RE) bezeichnet.

Die Elektroden 114, 116 sind durch Zuleitungen 124, 126 und über Anschlusskontakte 128, 130 auf einer ersten Oberfläche 132 des Schichtaufbaus 110 elektrisch kontaktierbar. Die Zuleitungen 124 erstrecken sich parallel zu einer Längserstreckungsrichtung (in Figur 1 mit *̅L̅*̅ gekennzeichnet) von den Anschlusskontakten 128, 130 zu den Elektroden 114, 116. Während die erste Zuleitung 124 dabei auf der ersten Oberfläche 132 angeordnet ist und von einer Abdeckschicht 134 abgedichtet wird und optional gegenüber dem Festelektrolyten 118 isoliert ausgestaltet sein kann, erstreckt sich die zweite Zuleitung 126 auf der gegenüberliegenden Seite des Festelektrolyten 118 in einer tieferen Schichtebene des Schichtaufbaus 110. Dementsprechend muss diese zweite Zuleitung 126 durch eine Durchkontaktierung 136 mit dem Anschlusskontakt 130 elektrisch verbunden werden. Die Durchkontaktierung 136 wird unten noch näher erläutert.

Weiterhin umfasst der Schichtaufbau 110 optional ein Substrat 138 und ein Heizelement 140, welches zwischen zwei Isolatorfolien 142 eingebettet sein kann. Das Heizelement 140 ist über zwei auf einer der ersten Oberfläche 132 gegenüberliegenden zweiten Oberfläche 144 angeordnete Heizerkontakte 146 kontaktierbar, welche ihrerseits über Durchkontaktierungen 148, 150 mit dem Heizelement 140 elektrisch verbunden sind. Der Bereich, in welchem die Durchkontaktierungen 136, 148 und 150 und/oder die Anschlusskontakte 128, 130 und/oder die Heizerkontakte 146 angeordnet sind, ist in Figur 1 mit der Bezugsziffer 152 bezeichnet und wird auch als Durchkontaktierungsbereich bezeichnet.

Der Schichtaufbau 110 weist in dem in Figur dargestellten Ausführungsbeispiel eine Länge L in Längserstreckungsrichtung *̅L̅*̅ und quer hierzu eine Breite B auf. Weiterhin weist der Schichtaufbau 110 im gesinterten Zustand eine Gesamtschichtdicke D auf.

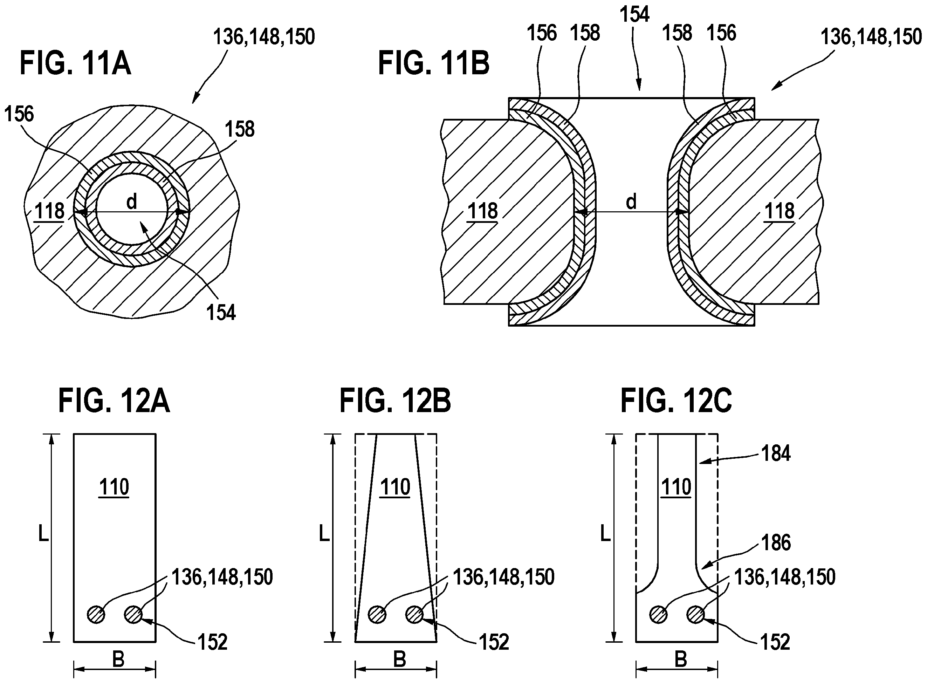

Zur Lösung der oben beschriebenen Problematik, welche darin besteht, dass der Festelektrolyt 118 auch im Bereich der Durchkontaktierungen 136, 148, 150 typischerweise ab einer Temperatur von ca. 350 °C ionisch leitfähig wird, werden diese in der Praxis häufig elektrisch isoliert. Dies ist in den Figuren 11A und 11B dargestellt, wobei Figur 11A eine Draufsicht auf eine Durchkontaktierung 136, 148, 150 darstellt, und Figur 11B eine Schnittdarstellung von der Seite. Die Darstellungen zeigen, dass die Durchkontaktierungen 136, 148, 150 in der Regel eine Bohrung 154 mit einem Durchmesser d aufweisen. Diese Bohrung wird durch eine oder mehrere Schichten eines Isolatormaterials 156 elektrisch
isoliert, welches beispielsweise als isolierende Paste bei der Herstellung durch die Bohrung 154 gesaugt werden kann. Anschließend wird die Bohrung 154 vollständig oder teilweise mit mindestens einem leitfähigen Material 158 gefüllt. Dieses leitfähige Material 158 kann beispielsweise wiederum als Paste durch die Bohrung 154 hindurchgesaugt werden. Das Isolatormaterial 156 weist vorzugsweise eine Schichtdicke von mindestens 30 µm auf.

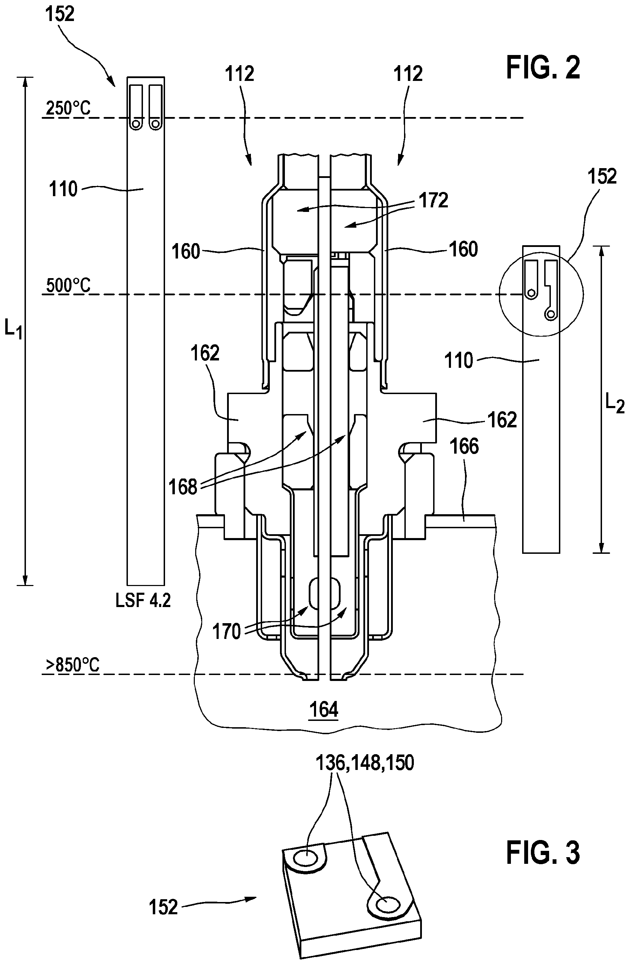

In Figur 3 ist in einer Draufsicht ein typischer Durchkontaktierungsbereich 152 gezeigt, welcher exemplarisch die Ausgestaltung eines derartigen Durchkontaktierungsbereichs mit Durchkontaktierungen 136, 148, 150, betrachtet von einer der Oberflächen 132, 144, verdeutlicht.

In Figur 2 sind exemplarisch verschiedene Sensorelemente 112 mit Schichtaufbauten unterschiedlicher Längen L₁ beziehungsweise L₂ einander gegenübergestellt. Dabei zeigt die linke Bildhälfte ein Sensorelement 112 mit einem langen Schichtaufbau 110, wohingegen die rechte Bildhälfte ein Sensorelement 112 mit einem kürzeren Schichtaufbau 110 zeigt. Dargestellt ist jeweils der Schichtaufbau 110 und dessen Einbau in ein Gehäuse 160 des Sensorelements, mit einem Sechskant 162, über welchen das Gehäuse mit einem Messgasraum 164 verbunden werden kann. Beispielsweise kann das Gehäuse 160 mittels des Sechskants 162 in eine Wand 166 eines Abgastrakts einer Brennkraftmaschine eingeschraubt werden. Innerhalb des Gehäuses 160 ist ein Abdichtungsbereich 168 vorgesehen, in welchem der Schichtaufbau 110 gehalten und abgedichtet wird, so dass ein Messbereich 170, in welchem die Beaufschlagung mit Gas aus dem Messgasraum 164 erfolgt, von einem Kontaktierungsbereich 172 auf der gegenüberliegenden Seite des Abdichtungsbereichs 168 getrennt wird.

Weiterhin sind in Figur 2 typische Temperaturangaben dargestellt. Die linke Bildhälfte zeigt eine typische Sprungsonde vom Typ LSF4.2, bei welcher an der Spitze des Schichtaufbaus 110 im Messbereich 170 Temperaturen von mehr als 850 °C auftreten können. Am gegenüberliegenden Ende, im Durchkontaktierungsbereich 152, treten hingegen typischerweise Temperaturen von 250 °C oder weniger auf.

Die rechte Bildhälfte zeigt hingegen ein kurzbauendes Sensorelement, dessen Länge L₂ im Vergleich zur Länge L₁ auf ca. zwei Drittel verkürzt ist. Wie hierbei erkennbar ist, beträgt die Temperatur im Durchkontaktierungsbereich 152 dieses kurzbauenden Sensorelements 112 noch ca. 500 °C. Da die Keramik des Festelektrolyten 118 des Schichtaufbaus 110 typischerweise oberhalb von 300 °C ionisch leitfähig wird, bedeutet eine Verkürzung des Schichtaufbaus 110 somit das Erfordernis eines aufwendigeren Designs im Durchkontaktierungsbereich 152. So steigen die Anforderungen an die elektrische Isolierung durch das Isolatormaterial 156. Zusätzlich wird in vielen Fällen eine Isolationsprüfung erforderlich, um eine gleich bleibende hohe Qualität gewährleisten zu können.

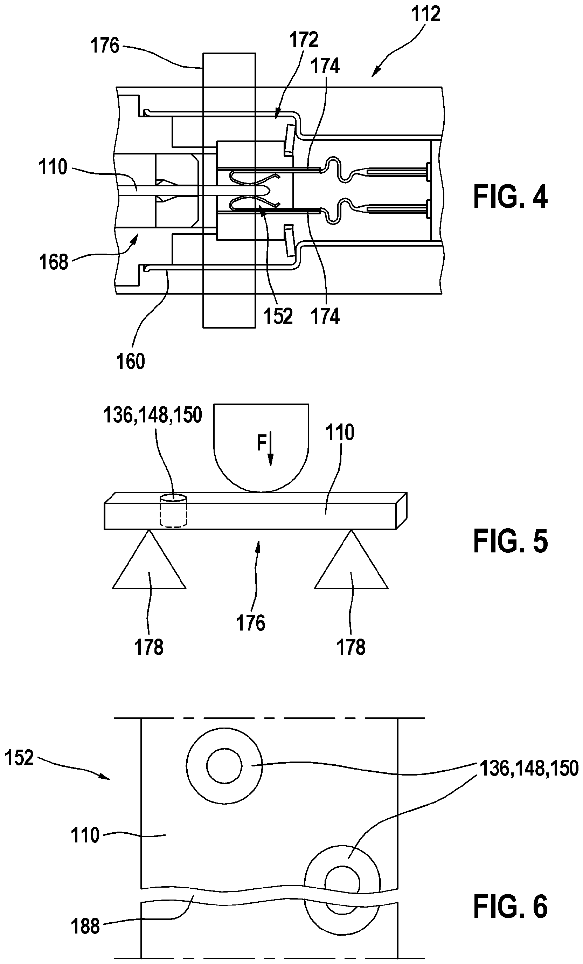

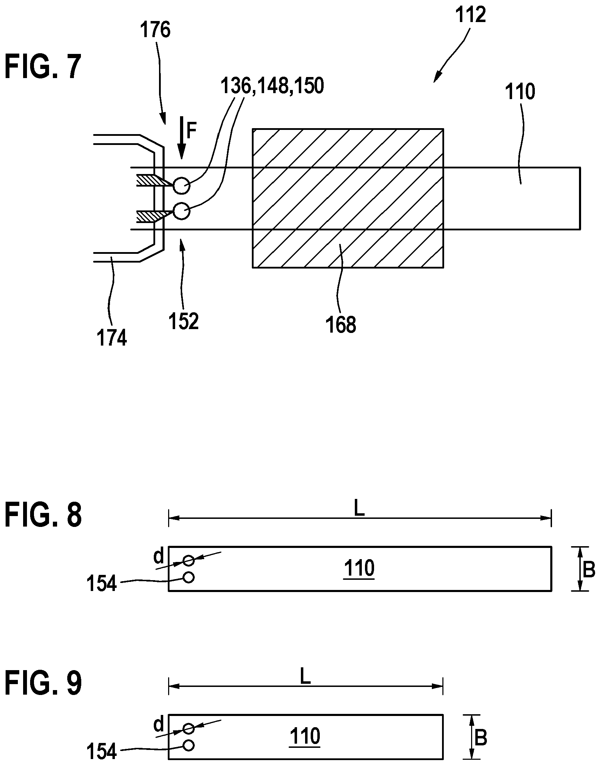

In Figur 4 ist der Kontaktierungsbereich 172 eines typischen Sensorelements 112 nochmals dargestellt. Diese Darstellung zeigt, dass der Schichtaufbau 110 an mindestens zwei Positionen fixiert ist. So ist zum einen eine Fixierung im Abdichtungsbereich 168 vorgesehen, und zum anderen eine Fixierung mittels eines Kontakthalters 174 im Durchkontaktierungsbereich 152, in welchem die elektrische Kontaktierung des Schichtaufbaus 110 erfolgt. Dementsprechend treten in einem in Figur 4 gekennzeichneten Belastungsbereich 176 hohe mechanische Belastungen auf. Dies ist in den Figuren 5 und 7 nochmals dargestellt. Figur 7 zeigt den Durchkontaktierungsbereich 142 im Sensorelement 112 nochmals schematisch in Draufsicht und verdeutlicht, dass Kräfte F, insbesondere Biegekräfte, insbesondere zwischen dem Abdichtungsbereich 168 und dem Bereich der Fixierung durch den Kontakthalter 174 auftreten können. Figur 5 zeigt in schematischer Darstellung ein typisches Biegebelastungsexperiment eines Schichtaufbaus 110 mit einer oder mehreren Durchkontaktierungen 136, 148, 150, durch eine Beaufschlagung mit einer Kraft F in einem Belastungsbereich 176 zwischen zwei Auflagepunkten 178.

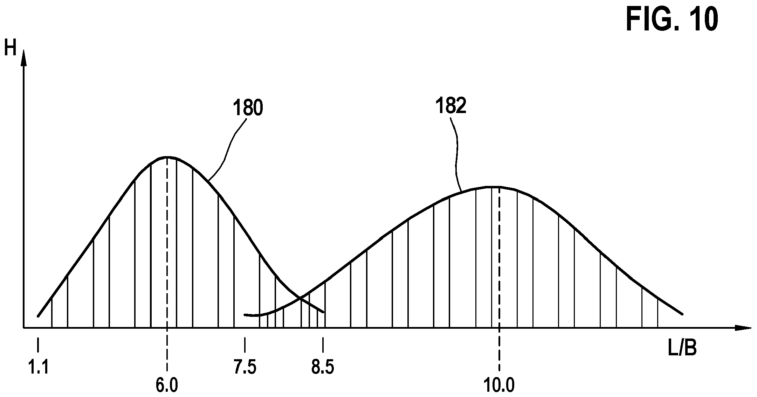

Mit dem in Figur 5 dargestellten Versuchsaufbau wurde verschiedene Biegebelastungsversuche durchgeführt, bei welchen verschiedene Verhältnisse erprobt wurden. So wurden beispielsweise optimale Verhältnisse der Länge L zur Breite B, der Länge L zum Bohrungsdurchmesser d, der Breite B zum Bohrungsdurchmesser d oder andere Verhältnisse untersucht. In Figur 10 sind typische Versuchsergebnisse aufgetragen. Dabei ist auf der horizontalen Achse ein bestimmtes Verhältnis aufgetragen, beispielsweise das Verhältnis der Länge L zur Breite B (also L/B) oder ein ähnliches Verhältnis, wohingegen auf der vertikalen Achse eine Häufigkeit H aufgetragen ist. Dabei kennzeichnet die Kurve 180 die Häufigkeitsverteilung von Experimenten, bei welchen kein Versagen der Schichtaufbauten 110, beispielsweise durch einen Bruch, auftrat, also die Häufigkeitsverteilung "guter Proben", wohingegen die Kurve 182 die Häufigkeitsverteilung von Experimenten beschreibt, welche zu einem Bruch führten. Figur 10 zeigt also exemplarisch ein Prüfergebnis mit zwei Populationen von Sensorelementen, wobei Kurve 180 die Population von Sensorelementen kennzeichnet, die bei einer Biegebelastung von beispielsweise 100 N nicht brechen und deren Verhältnisse L/B beispielsweise innerhalb des genannten Bereichs liegen, wohingegen Kurve 182 die Population von Sensorelementen kennzeichnet, die bei einer Biegebelastung von beispielsweise 100 N brechen und deren Verhältnisse L/B beispielsweise außerhalb des genannten Bereichs liegen. Bei den Experimenten wurden in systematischen Versuchsreihen L/B-Verhältnisse ermittelt, welche bei isolationsbeschichteten Durchkontaktierungen 136, 148, 150 erforderlich waren, um eine ausreichende Bruchfestigkeit des Schichtaufbaus 110 auch in kritischen Applikationen zu gewährleisten. Dabei wurden auch Alterungseffekte, beispielsweise in Form von Mikrorisswachstum berücksichtigt.

Figur 6 zeigt exemplarisch eine Draufsicht eines Durchkontaktierungsbereichs 152, bei welchem bei den in Figur 5 gezeigten Belastungsexperimenten ein Bruch 188 auftrat. Wie aus der Darstellung erkennbar ist, zieht sich der Bruch 188 insbesondere durch eine der Durchkontaktierungen 136, 148, 150, so dass mit hoher Wahrscheinlichkeit die Schwächung des Schichtaufbaus 110 durch die Bohrungen 154 der Durchkontaktierungen 136, 148, 150 als Ursache für den Bruch 188 anzunehmen ist.

Die Ergebnisse führten zu den oben beschriebenen optimalen Verhältnissen. Während beispielsweise Schichtaufbauten 110, wie in Figur 8 exemplarisch dargestellt, die dem Stand der Technik entsprechen, typischerweise ein Verhältnis L/B > 10 aufweisen, wurde erfindungsgemäß, wie in Figur 9 symbolisch dargestellt, ein Verhältnis L/B als optimal ermittelt, welches zwischen 6,0 und 8,5, vorzugsweise zwischen 7,5 und 8,5, liegt. Vorzugsweise beträgt dabei die Gesamtschichtdicke D nach dem Sintern zwischen 0,7 und 2,5 mm. Weiterhin wurde ein optimales Verhältnis zwischen der Breite B und dem Durchmesser d der Bohrungen 154 ermittelt, welches zwischen 3,8 und 5,0 und besonders bevorzugt zwischen 4,0 und 4,5 liegt.

Wie oben dargestellt, wird die Breite des Schichtaufbaus 110 vorzugsweise im Durchkontaktierungsbereich 152 angegeben, so dass die oben beschriebenen Verhältnisse insbesondere in diesem Durchkontaktierungsbereich 152 vorliegen können. Der Durchkontaktierungsbereich 152 ist dabei der Bereich, in welchem die Durchkontaktierungen 136, 148, 150 angeordnet sind. Beispielsweise kann der Durchkontaktierungsbereich 152 ein Bereich sein, welcher sich vom äußersten Rand der am weitesten von den Elektroden 114, 116 entfernten Durchkontaktierungen 136, 148, 150 bis hin zu den Elektroden 114, 116 am nächsten liegenden Rand der nächsten Durchkontaktierung 136, 148, 150 erstreckt. Optional kann sich der Durchkontaktierungsbereich 152 auch noch in einer oder beiden Richtungen parallel zur Längserstreckungsrichtung über diesen Bereich hinaus erstrecken, beispielsweise um nicht mehr als 5 mm, vorzugsweise um nicht mehr als 2 mm. Beispielsweise kann die Breite B der Abstand zwischen einander gegenüberliegenden Kanten an der breitesten Stelle dieses Durchkontaktierungsbereichs 152 sein. Alternativ kann die Breite B auch in dem Kontaktierungsbereich 172 und/oder an dem Ende des Schichtaufbaus 110 gemessen werden, welches am weitesten von den Elektroden 114, 116 entfernt angeordnet ist.

Die oben beschriebenen Verhältnisse, welche im Rahmen der vorliegenden Erfindung beansprucht oder besonders bevorzugt sind, können insbesondere lediglich im Durchkontaktierungsbereich 152 aufrechterhalten sein. Dies ist exemplarisch in den Figuren 12A bis 12C gezeigt, welche in Draufsicht verschiedene Querschnitte erfindungsgemäß ausgestalteter Schichtaufbauten 110 zeigen. So zeigt Figur 12A einen rechteckigen Querschnitt mit dem genannten Verhältnis L/B. Figur 12B zeigt hingegen einen trapezförmigen Querschnitt, bei welchem die Breite B vom Durchkontaktierungsbereich 152 hin zum gegenüberliegenden Ende des Schichtaufbaus 110, also dem Ende im Bereich der Elektroden 114, 116 (in Figur 12B nicht dargestellt) abnimmt. Figur 12C zeigt hingegen eine Ausgestaltung eines Schichtaufbaus 110 mit einer Verjüngung 184 im Bereich der Elektroden 114, 116. Die Verjüngung 184 kann insbesondere derart ausgestaltet sein, dass diese Abrundungen 186 aufweist, welche beispielsweise mittels einer Computeroptimierung ermittelt werden können (CAO, Computer Aided Optimization).

## Patentansprüche

1. Sensorelement (112) zur Erfassung mindestens einer Eigenschaft eines Gases in einem Messgasraum (164), insbesondere zur Bestimmung eines Anteils einer Gaskomponente, wobei das Sensorelement (112) mindestens einen Schichtaufbau (110) mit mindestens zwei Elektroden (114, 116) und mindestens einem die Elektroden (114, 116) verbindenden keramischen Festelektrolyten (118) aufweist, wobei der Schichtaufbau (110) mindestens eine Durchkontaktierung (136, 148, 150) umfasst, wobei die Durchkontaktierung (136, 148, 150) mindestens eine Schichtebene durchdringt und wobei die Durchkontaktierung (136, 148, 150) gegenüber einem Material der durchdrungenen Schichtebene elektrisch isoliert ist, wobei der Schichtaufbau (110) parallel zu einer oder mehreren Schichtebenen des Schichtaufbaus (110) eine Längserstreckung mit einer Länge L und eine Quererstreckung mit einer Breite B aufweist, wobei das Verhältnis L/B im Bereich von 6,0 bis 8,5 liegt, **dadurch gekennzeichnet, dass** die Durchkontaktierung (136, 148, 150) mindestens eine Bohrung (154) in dem Schichtaufbau (110) sowie mindestens eine zumindest teilweise die Bohrung (154) ausfüllende Füllung umfasst, wobei die Bohrung (154) einen Durchmesser d aufweist, wobei das Verhältnis B/d im Bereich von 3,8 bis 5,0 liegt.

2. Sensorelement (112) nach einem der vorhergehenden Ansprüche, wobei das Verhältnis L/B im Bereich von 7,5 bis 8,5 liegt.

3. Sensorelement (112) nach einem der vorhergehenden Ansprüche, wobei der Schichtaufbau (110) senkrecht zu der mindestens einen Schichtebene eine Gesamtschichtdicke D aufweist, insbesondere im gesinterten Zustand, wobei die Gesamtschichtdicke im Bereich von 0,3 mm bis 4,0 mm, insbesondere im Bereich von 0,7 mm bis 2,5 mm, liegt.

4. Sensorelement (112) nach einem der vorhergehenden Ansprüche, wobei die Länge L eine maximale Länge in der Längserstreckungsrichtung ist und wobei die Breite B eine maximale Breite quer zur Längserstreckungsrichtung, insbesondere senkrecht zur Längserstreckungsrichtung, ist.

5. Sensorelement (112) nach einem der vorhergehenden Ansprüche, wobei die Länge L kleiner ist als 65 mm.

6. Sensorelement (112) nach einem der vorhergehenden Ansprüche, wobei der Schichtaufbau (110) mindestens eine Zuleitung (124, 126) umfasst, wobei sich die mindestens eine Zuleitung (124, 126) von mindestens einem Anschlusskontakt (128, 130) zu mindestens einer der Elektroden (114, 116) erstreckt, wobei die Zuleitung (124, 126) zumindest teilweise parallel zu der Längserstreckung verläuft.

7. Sensorelement (112) nach einem der vorhergehenden Ansprüche, wobei die Durchkontaktierung (136, 148, 150) gegenüber einem Festelektrolytmaterial elektrisch isoliert ist.

8. Sensorelement (112) nach einem der vorhergehenden Ansprüche, wobei die die Bohrung (154) ausfüllende Füllung eine Füllung mit einer oder mehreren Schichten eines Isolatormaterials (156) und/oder eine vollständige oder teilweise Füllung mit einem elektrisch leitfähigen Material (158) ist und/oder wobei das Verhältnis B/d im Bereich von 4,0 bis 4,5 liegt.

9. Sensorelement (112) nach einem der vorhergehenden Ansprüche, wobei die Durchkontaktierung (136, 148, 150) in einem Durchkontaktierungsbereich (152) des Schichtaufbaus (110) angeordnet ist, wobei die Breite B eine Breite des Schichtaufbaus (110) im Durchkontaktierungsbereich (152) ist.

10. Sensorelement (112) nach einem der vorhergehenden Ansprüche, wobei der Schichtaufbau (110) parallel zu der Schichtebene des Schichtaufbaus (110) einen Querschnitt aufweist, ausgewählt aus einem der folgenden Querschnitte: ein rechteckiger Querschnitt; ein trapezförmiger Querschnitt; ein sich verjüngender Querschnitt, insbesondere ein Querschnitt mit einer maximalen Breite in einem Durchkontaktierungsbereich (152) und einer Verjüngung im Bereich der Elektroden (114,116).

## Claims

1. Sensor element (112) for detecting at least one property of a gas in a measurement gas space (164), in particular for determining a proportion of a gas component, wherein the sensor element (112) has at least one layer structure (110) having at least two electrodes (114, 116) and at least one ceramic solid electrolyte (118) connecting the electrodes (114, 116), wherein the layer structure (110) comprises at least one plated-through hole (136, 148, 150), wherein the plated-through hole (136, 148, 150) penetrates through at least one layer plane and wherein the plated-through hole (136, 148, 150) is electrically insulated from a material of the penetrated layer plane, wherein the layer structure (110), parallel to one or more layer planes of the layer structure (110), has a longitudinal extent having a length L and a transverse extent having a width B, wherein the ratio L/B is in the range of 6.0 to 8.5, **characterized in that** the plated-through hole (136, 148, 150) comprises at least one hole (154) in the layer structure (110) and also at least one filling that at least partly fills the hole (154), wherein the hole (154) has a diameter d, wherein the ratio B/d is in the range of 3.8 to 5.0.

2. Sensor element (112) according to any of the preceding claims, wherein the ratio L/B is in the range of 7.5 to 8.5.

3. Sensor element (112) according to any of the preceding claims, wherein the layer structure (110), perpendicular to the at least one layer plane, has a total layer thickness D, in particular in the sintered state, wherein the total layer thickness is in the range of 0.3 mm to 4.0 mm, in particular in the range of 0.7 mm to 2.5 mm.

4. Sensor element (112) according to any of the preceding claims, wherein the length L is a maximum length in the longitudinal extent direction and wherein the width B is a maximum width transverse with respect to the longitudinal extent direction, in particular perpendicular to the longitudinal extent direction.

5. Sensor element (112) according to any of the preceding claims, wherein the length L is less than 65 mm.

6. Sensor element (112) according to any of the preceding claims, wherein the layer structure (110) comprises at least one lead (124, 126), wherein the at least one lead (124, 126) extends from at least one connection contact (128, 130) to at least one of the electrodes (114, 116), wherein the lead (124, 126) runs at least partly parallel to the longitudinal extent.

7. Sensor element (112) according to any of the preceding claims, wherein the plated-through hole (136, 148, 150) is electrically insulated from a solid electrolyte material.

8. Sensor element (112) according to any of the preceding claims, wherein the filling that fills the hole (154) is a filling with one or a plurality of layers of an insulator material (156) and/or a complete or partial filling with an electrically conductive material (158) and/or wherein the ratio B/d is in the range of 4.0 to 4.5.

9. Sensor element (112) according to any of the preceding claims, wherein the plated-through hole (136, 148, 150) is arranged in a plated-through hole region (152) of the layer structure (110), wherein the width B is a width of the layer structure (110) in the plated-through hole region (152).

10. Sensor element (112) according to any of the preceding claims, wherein the layer structure (110), parallel to the layer plane of the layer structure (110), has a cross section selected from one of the following cross sections: a rectangular cross section; a trapezium-shaped cross section; a tapering cross section, in particular a cross section having a maximum width in a plated-through hole region (152) and a taper in the region of the electrodes (114, 116).

## Revendications

1. Elément capteur (112) destiné à détecter au moins une propriété d'un gaz dans un espace de mesure de gaz (164), notamment pour déterminer une proportion d'un constituant gazeux, dans lequel l'élément capteur (112) comporte au moins une structure en couches (110) munie d'au moins deux électrodes (114, 116) et au moins un électrolyte solide céramique (118) reliant les électrodes (114, 116), dans lequel la structure en couches (110) comprend au moins un trou d'interconnexion (136, 148, 150), dans lequel le trou d'interconnexion (136, 148, 150) traverse au moins un plan de couche et dans lequel le trou d'interconnexion (136, 148, 150) est isolé électriquement vis-à-vis d'un matériau du plan de couche traversé, dans lequel la structure en couches (110) présente, parallèlement à un ou plusieurs plans de couches de la structure en couches (110), une extension longitudinale de longueur L et une extension transversale de largeur B, dans lequel le rapport L/B se situe dans la plage de 6,0 à 8,5, **caractérisé en ce que** le trou d'interconnexion (136, 148, 150) comprend au moins une perforation (154) dans la structure en couches (110) ainsi qu'au moins un remplissage qui remplit au moins partiellement la perforation (154), dans lequel la perforation (154) présente un diamètre d, dans lequel le rapport B/d se situe dans la plage de 3,8 à 5,0.

2. Elément capteur (112) selon l'une quelconque des revendications précédentes, dans lequel le rapport L/B se situe dans la plage de 7,5 à 8,5.

3. Elément capteur (112) selon l'une quelconque des revendications précédentes, dans lequel la structure en couches (110) présente, perpendiculairement à l'au moins un plan de couche, une épaisseur de couche totale D, notamment à l'état fritté, dans lequel l'épaisseur de couche totale se situe dans la plage de 0,3 mm à 4,0 mm, notamment dans la plage de 0,7 mm à 2,5 mm.

4. Elément capteur (112) selon l'une quelconque des revendications précédentes, dans lequel la longueur L est une longueur maximale dans la direction d'extension longitudinale et dans lequel la largeur B est une largeur maximale transversalement à la direction d'extension longitudinale, notamment perpendiculairement à la direction d'extension longitudinale.

5. Elément capteur (112) selon l'une quelconque des revendications précédentes, dans lequel la longueur L est inférieure à 65 mm.

6. Elément capteur (112) selon l'une quelconque des revendications précédentes, dans lequel la structure en couches (110) comprend au moins une ligne d'alimentation (124, 126), dans lequel l'au moins une ligne d'alimentation (124, 126) s'étend d'au moins un contact de raccordement (128, 130) jusqu'à au moins l'une des électrodes (114, 116), dans lequel la ligne d'alimentation (124, 126) s'étend au moins partiellement parallèlement à la direction d'extension longitudinale.

7. Elément capteur (112) selon l'une quelconque des revendications précédentes, dans lequel le contact de raccordement (136, 148, 150) est électriquement isolé vis-à-vis d'un matériau d'électrolyte solide.

8. Elément capteur (112) selon l'une quelconque des revendications précédentes, dans lequel le remplissage remplissant la perforation (154) est un remplissage par une ou plusieurs couches d'un matériau isolant (156) et/ou est un remplissage total ou partiel par un matériau électriquement conducteur (158) et/ou dans lequel le rapport B/d se situe dans la plage de 4,0 à 4,5.

9. Elément capteur (112) selon l'une quelconque des revendications précédentes, dans lequel le trou d'interconnexion (136, 148, 150) est disposé dans une zone de trou d'interconnexion (152) de la structure en couches (110), dans lequel la largeur B est une largeur de la structure en couches (110) dans la zone de trou d'interconnexion (152).

10. Elément capteur (112) selon l'une quelconque des revendications précédentes, dans lequel la structure en couches (110) présente, parallèlement au plan de couche de la structure en couches (110), une section transversale sélectionnée parmi l'une des sections transversales suivantes : une section transversale rectangulaire, une section transversale trapézoïdale ; une section transversale décroissante, en particulier une section transversale présentant une largeur maximale se situant dans une zone de trou de contact (152) et un rétrécissement dans la région des électrodes (114, 116).
